# EUROPEAN PATENT SPECIFICATION

(11) **EP 0 891 457 B1**
(45) Date of publication and mention of the grant of the patent: **23.01.2002**
(21) Application number: 97915618.9
(22) Date of filing: 08.04.1997
(51) Int. Cl.: E03F 7/04, E03F 1/00

(54) **METHOD AND APPARATUS FOR REDUCING SALINE INFILTRATION IN COASTAL SEWERAGE SYSTEMS**
VERFAHREN UND VORRICHTUNG ZUR VERRINGERUNG DER SALZINFILTRATION IN KÜSTENABWASSERANLAGEN
PROCEDE ET APPAREIL DE REDUCTION DES INFILTRATIONS SALINES DANS LES RESEAUX D'EGOUTS COTIERS

(30) Priority: 10.04.1996 GB 9607414
(43) Date of publication of application: 20.01.1999
(73) Proprietor: Infiltration Control Systems Limited, Plymouth PL4 6AJ (GB)
(72) Inventor: ROBINSON, John Peter, Newton Abbot, Devon TQ12 5SS (GB); WRIGHT, Geoffrey David, Plymouth, Devon PL6 5BE (GB)
(74) Representative: Abbie, Andrew Kenneth
(86) International application number: GB9700973
(87) International publication number: WO9738177

(56) References cited:
- EP-A- 0 047 489
- EP-A- 0 205 013
- WO-A-82/04471
- US-A- 5 321 601

## Description

This invention relates to a method and apparatus for reducing saline infiltration in coastal sewerage systems having outfalls which have been intercepted to feed into, for example, sewage pumping stations or collecting systems, or mitigating such infiltration in new schemes for coastal sewerage systems which include sewage treatment works.

Many outfalls which previously discharged untreated sewage directly into coastal receiving waters have now been intercepted to feed into, for example, sewage pumping stations or collecting systems, which may include storm sewage detention tanks, to facilitate treatment of the sewage prior to discharge into the coastal waters. The number of such interceptions has increased significantly because of schemes to ensure compliance with European Bathing Water and Urban Waste Water Treatment legislation.

Under conditions present in gravity crude sewage outfall systems, where sewers discharge untreated sewage directly into coastal receiving waters, the sewers fill and empty with sewage or brackish water as the tides ebb and flow. In sewers which are influenced by the tides, i.e. where sea water is present in, or influences the pressure of ground water in, the soil around a sewer pipe, these conditions tend to cause a modest internal over-pressure or a substantial equilibrium of hydrostatic pressure across the wall of the sewer pipe when the level of the tide is above that of the sewer pipe. Negligible saline infiltration generally occurs across the wall of the sewer pipe under such conditions.

However, where sewers have been intercepted and discharge into sumps, for example at sewage pumping stations, tidal waters do not flow freely into and out of the sewer, with the incoming and outgoing tide, and the sewers remain only partly full. This results in an imbalance in hydrostatic pressure across the wall of a sewer pipe influenced by the tide when the level of the tide is above that of the sewer pipe and can lead to saline infiltration i.e. migration of tidally influenced waters into the sewer pipe across the wall of the sewer pipe through existing breaches in the fabric of the sewer. The presence of saline waters can greatly reduce the effectiveness of various sewage treatment processes, for example, it can adversely affect organisms in microbiological treatment processes, impede settling and cause undesirable odours. Strong infiltration flows can permit the migration of fine material from around a sewer pipe into the sewer causing a progressive deterioration of the fabric of the sewer, loss of surrounding ground support and a consequential increase in the rate of infiltration and risk of structural failure. Such flows also increase the total volume of fluid carried by the sewer and can occupy detention tank volume designed for the storage of storm sewage only to a significant degree.

Considerable resources have been provided by water companies to mitigate the effects of saline infiltration. However, these have been directed primarily at repairing and sealing sewers and modifying sewage treatment processes. The former approach is problematic where access to the sewer is difficult, and can be disruptive when work is carried out in built up areas. Private sewers, private connections and pipelines which are inaccessible for sealing or repair will continue to suffer the effects of infiltration using the former approach. The latter approach does not address some of the above-mentioned problems such as sewer fabric deterioration, loss of ground support, occupation of storm sewage design detention volume and possible additional sewerage capacity requirements.

An object of the invention is to mitigate or overcome at least some of the above-mentioned problems.

Accordingly, the invention provides a method for reducing saline infiltration in coastal sewerage systems, wherein the level or hydrostatic pressure of sewage in a sewer which is subject to tidal influences and the level or hydrostatic pressure of the influencing tide are used for controlling valve means to regulate discharge of said sewage from said sewer into a sewage pumping station or collecting system such that the hydrostatic head of the influencing tide adjacent the sewer does not exceed the hydrostatic head of sewage in the sewer upstream of said valve means by more than a predetermined amount, at least during non-extreme conditions of tide and weather.

The discharge is preferably regulated such that said hydrostatic head of sewage in the sewer upstream of said valve means is 0mm to 75mm above said hydrostatic head of the influencing tide adjacent the sewer when the level of the influencing tide is above a predetermined set level.

The level of sewage upstream of said valve means and the level of the influencing tide may be detected by respective sewage and tide detector means and passed to a control means for controlling said valve means.

The tide detector means and said sewage detector means may each comprise an ultrasonic level sensor or a pressure transducer.

The control means is preferably a programmable logic controller which processes said detected levels and information from said valve means and causes said valve means to open or close at user determined rates according to the differential between said levels.

The control means may receive and process information from a plurality of detector means and a plurality of valve means, and control said plurality of valve means.

The programmable logic controller may be programmed such that it does not cause the valve means to close if a predetermined critical level of sewage is detected in the sewer upstream of the valve means.

The programmable logic controller may be programmed such that it causes the valve means to open fully when the detected level of the influencing tide is below the predetermined set level or below the predetermined set level by a predetermined amount.

The sewer may discharge into a sump and the level of fluids in the sump may be detected and passed to the programmable logic controller, and said programmable logic controller may be programmed such that it causes the valve means to open fully when the detected level of the fluids in the sump is above a predetermined critical level.

If the flow of sewage in the sewer is insufficient to maintain a desired differential in hydrostatic head, fluids may be fed into the sewer to maintain said desired differential.

If the flow of sewage in the sewer is insufficient to maintain said desired differential in hydrostatic head, sewage maybe pumped back into the sewer from said sump to maintain said desired differential.

The valve means may be operated by the application of pressure transmitted from a pressure module subject to the varying hydrostatic head of the influencing tide.

The pressure module may be subject to a pre-load.

The valve means may comprise a conduit having an elastically deformable wall for conveying said sewage, said pressure module may comprise a flexible membrane, and pressure in said pressure module may be generated by said pre-load and the varying hydrostatic head of the influencing tide acting on said membrane and be transmitted to the outer surface of the deformable wall by incompressible fluid in an hydraulic system to vary the minimum cross section of the flow path through said conduit according to the pressure differential across the deformable wall.

The pressure may be amplified by amplifying means before transmission to said valve means.

The amplifying means may comprise a servo device.

If the flow of sewage in the sewer is insufficient to maintain said desired differential in hydrostatic head, fluids may be fed into the sewer to maintain said desired differential.

The invention also includes apparatus for reducing saline infiltration in coastal sewerage systems comprising sewage detector means for detecting the level of sewage in a sewer which is subject to tidal influences; tide detector means for detecting the level of the influencing tide; valve means for regulating the discharge of sewage from said sewer; and control means responsive to said sewage detector means, said tide detector means and said valve means for controlling said valve means such that the hydrostatic head of the influencing tide adjacent the sewer does not exceed the hydrostatic head of sewage in said sewer upstream of said valve means by more than a predetermined amount.

The control means may comprise a programmable logic controller.

The sewage detector means and said tide detector means may each comprise an ultrasonic level sensor or a pressure transducer.

The valve means may comprise an electrically, pneumatically or hydraulically driven actuatable valve.

The programmable logic controller may be programmed such that, in use, it does not cause the valve means to close if a predetermined critical level of sewage is detected in the sewer upstream of the valve means.

The programmable logic controller may be programmed such that, in use, it causes the valve means to open fully when the detected level of the influencing tide is below a predetermined set level or below the predetermined set level by a predetermined amount.

The apparatus may further comprise sump detector means for detecting the level of fluids in a sump into which the sewer discharges, and said programmable logic controller may be programmed such that, in use, it causes the valve means to open fully when the detected level of the fluids in the sump is above a predetermined critical level.

The apparatus may comprise a plurality of said valve means, said sewage detector means and said tide detector means corresponding to respective sewers, and said control means may be responsive thereto for controlling said plurality of valve means.

The invention also includes an apparatus for reducing saline infiltration in coastal sewerage systems comprising a pressure module adapted to transmit the varying hydrostatic pressure of a tide which influences a sewer to a remote pressure responsive valve means adapted to regulate discharge of sewage from said sewer.

The pressure module may be pre-loaded and adapted to transmit a pre-load pressure with said varying hydrostatic pressure of the influencing tide to said pressure responsive valve means.

The apparatus may include means for transmitting said pre-load and varying hydrostatic pressures by an incompressible fluid and said pressure responsive valve means may comprise a pinch valve having an elastically deformable wall for conveying sewage adapted to regulate the discharge of sewage according to the differential between the pressure of the sewage inside said deformable wall and the pressure of said incompressible fluid outside said deformable wall.

The pinch valve may comprise a conduit having said elastically deformable wall and a rigid outer sleeve.

The pressure module may comprise a flexible membrane sized to allow displacement of a volume of said incompressible fluid necessary to close said valve means.

The apparatus may include amplifying means for amplifying said hydrostatic and/or pre-load pressure.

The amplifying means may comprise a servo device.

The invention is likely to be advantageous in that it can mitigate saline infiltration in the whole of a sewer catchment area including private sewers, private connections and sewer pipes which are difficult or impossible to access for sealing or repair.

The invention is also likely to be of particular benefit for sewerage systems in a poor structural condition and which would otherwise require extensive repair, and for mitigating the expense and disruption which would otherwise be necessary in carrying out repair and sealing work on sewers in confined commercial and residential areas.

The term influencing tide in this specification includes free flowing tidal water which influences the sewer and fresh or brackish ground water adjacent the sewer which influences the sewer. Changes in the level or hydrostatic pressure of tidally influenced ground water may lag changes in the level or hydrostatic pressure of free flowing tidal waters.

Reference herein to sewage includes reference to fluids which have infiltrated the sewer and may be mixed with the sewage.

In order that the invention may be well understood, two embodiments thereof, which will be given by way of example only, will now be described with reference to the accompanying drawings, in which:
Fig 1. is a schematic representation of a sewerage system having sensors respectively for sensing the level of sewage in a sewer and the level of tide influencing the sewer, and a valve for regulating discharge from the sewer;
Fig 2. is a block diagram showing a control system for use with the sewerage system;
Fig 3. is a data flow diagram showing the passage of information within the control system;
Fig 4. is a block diagram showing a control loop for the control system; and
Fig 5. is a schematic representation of another sewerage system having a pressure module for transmitting pressure to a pinch valve for regulating discharge from a sewer.

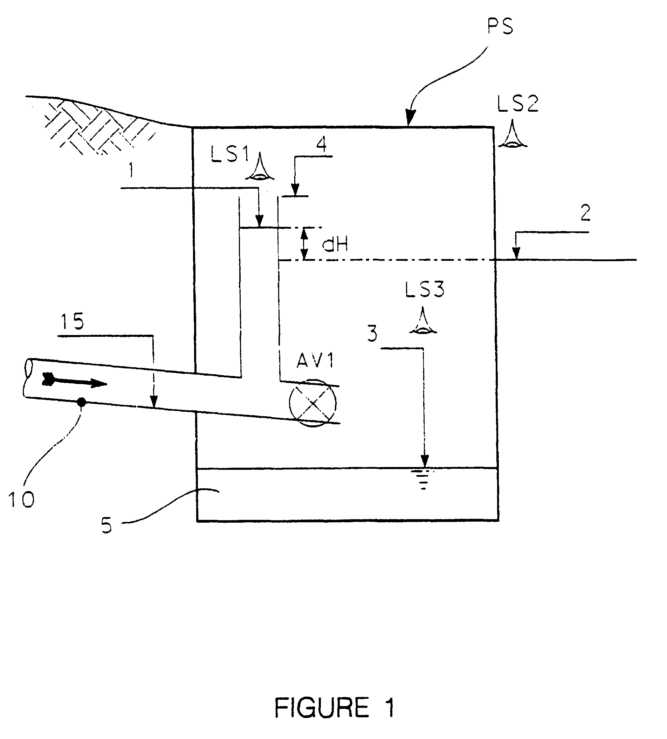

Referring to Figure 1, a coastal sewerage system is shown which includes a pumping station PS having a sump 5 into which untreated sewage is dischargeable from an incoming sewer 10 having a sewer inlet invert 15. The incoming sewer may be part of an interceptor system conveying intercepted sewage from one or more outfalls which prior to interception operated as gravity crude sewage outfalls, or may be part of such a gravity outfall which has been directly intercepted.

The sewerage system is influenced by salt water or fresh water which lies in the ground surrounding sewer pipes in the system and is subjected to the effects of tide which alters the hydrostatic pressure of the ground water as the tides ebb and flow. The tide level 2 of the influencing tide, the sewer level 1 of sewage in the incoming sewer 10 and the sump level 3 of sewage in the sump 5 are shown in Figure 1. A critical sump level 4 is shown at which fluids in the sump will overflow into the sewer 10 or other incoming sewer. Respective level sensors LS1, LS2 and LS3 are provided for sensing the sewer level 1, the tide level 2 and the sump level 3. These level sensors may be ultrasonic level sensors, for example, although these levels may also be detected using pressure transducers or mechanical devices eg float devices. In particular, the influencing tide level 2 may be detected by, for example, an ultra sonic level sensor or a pressure transducer in a borehole detecting the level or hydrostatic pressure of tidally influenced ground water in the vicinity of the sewer. Alternatively, the influencing tide level 2 may be detected by detecting the level or hydrostatic pressure of free flowing tidal water which directly affects the level or hydrostatic pressure of such ground water. In the latter case, changes in the level or hydrostatic pressure of the influencing ground water may lag the corresponding changes in the free flowing tidal water. Thus, where the influencing tide level 2 is detected by reference to such free flowing water, it may be necessary to compensate for this lag, as will be described hereinafter.

A valve AV1 is disposed proximate the discharge end of the incoming sewer 10 for regulating discharge of sewage from the sewer into the sump. The valve AV1 may be an electrically, pneumatically or hydraulically driven actuatable valve.

Control means (not shown in Figure 1) is provided, as will be described in more detail below, which receives information from the sewer level sensor LS1, the tide level sensor LS2 and the valve AV1 and causes the valve AV1 to move towards the fully open or fully closed positions at user determined rates according to the differential dH between the sewer and tide levels such that the level 2 of the influencing tide adjacent the sewer upstream of the valve AV1 does not exceed the level 1 of sewage in the sewer upstream of the valve AV1 by more than a predetermined amount during non-extreme conditions of tide and weather.

For extreme conditions of tide such as high water high spring tides and/or during certain meterological conditions such as high wind, the tide level may rise above a critical sewer level at which flooding will occur in a particular critical location. A non-extreme condition of tide is defined herein as a condition whereby the tide level does not exceed the critical sewer level at which flooding occurs. Infiltration of fluids into the sewer may occur during the relatively rare occurrence of extreme conditions of tide, when it may not be practical to maintain a predetermined sewer level/tide level differential by controlling the valve AV1.

The desired differential of sewer level above tide level may be in the range 0mm to 75mm when the tide level 2 is above the level of the incoming sewer inlet invert (or predetermined set level as described hereinafter) 15. A differential dH where the sewer level is below tide level by a modest amount may also be effective in reducing saline infiltration.

When the tide level 2 drops below the invert level 15 of the incoming sewer inlet the tide no longer exerts external hydrostatic pressure on the wall of the sewer 10 and therefore does not promote infiltration, and the valve AV1 is caused to open fully by the control means. Under these conditions, the differential between the hydrostatic head of sewage flowing in the sewer, which may be only partly full, and the hydrostatic head of the tide is identical with that of a gravity crude sewage outflow under low tide conditions, and depends on the volume of sewage flowing in the sewer 10 and the level of the tide 2. In any case, the differential between the hydrostatic head of sewage in the sewer and the hydrostatic head of the tide under low tide conditions presents no problems from the point of view of mitigating infiltration into the sewer.

If the tide level 2 is detected using free flowing tidal water the valve AV1 may be caused to open fully only when the detected tide level 2 is below the invert level (or predetermined set level) 15 at the inlet, or discharge end, of the sewer by a predetermined amount. This provides continued control over the valve AV1 to take account of any lag between changes in the free flowing water level remote from the sewer 10 and changes in the ground water level adjacent the sewer 10. This avoids problems due to a residual head of lagging ground water level causing infiltration into the emptying sewer once the free flowing water level has fallen below the sewer invert level (or predetermined set level) 15, and provides advance closure of valve AV1 with a rising tide so that sewage starts collecting in the sewer 10, helping to avoid problems caused by insufficient flow of sewage, particularly where the tide rises rapidly.

In some sewers infiltration is not a practical problem until the tide level 2 is a certain height above the invert level 15 of the sewer inlet because the fabric of the sewer is sound in its lower regions. In such cases, the valve means AV1 may be caused to open fully when the tide level is below a predetermined set level which is above the invert level 15 of the sewer inlet.

An emergency overflow facility is also envisaged for the sewer 10, and real time control, for example fail-safe real time control, may be provided to control the valve AV1 in response to signals from remote sensors, eg. tide level and sewer level sensors, to provide remote flooding sensitivity when the sewage in a portion of the sewer 10 reaches the critical sewer level at which flooding will occur in a particular critical location.

In the emergency overflow facility shown in Figure 1, the critical sump level 4 at which fluids will overflow into the sewer 10 or other incoming sewer is identical with the critical sewer level at which flooding will occur from the sewer 10 into the sump 5.

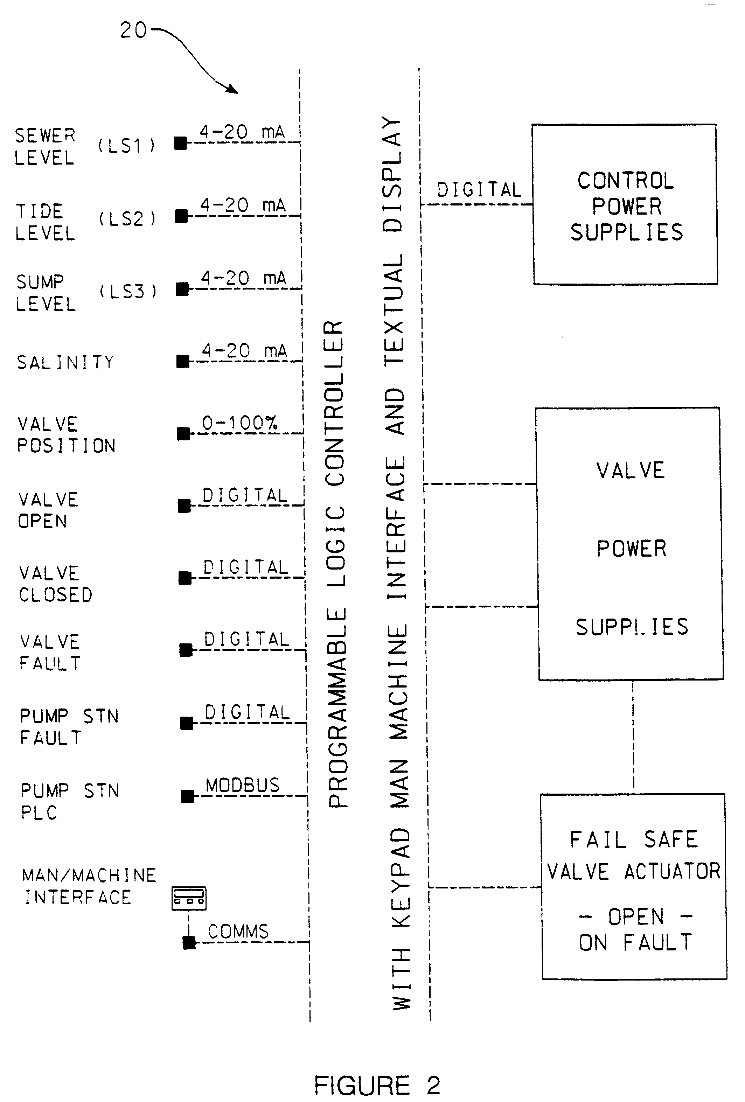

The control means may be provided by a control system 20 as shown in Figure 2. The control system 20 comprises a programmable logic controller (PLC) with a man-machine interface such as a key pad and textual display, power supplies for the controller and the valve, and inputs from various sources including the sewer, tide and sump level sensors LS1, LS2 and LS3, a salinity sensor, a valve position sensor, valve and pump station fault sensors and the pumping station's PLC. A fail-safe valve actuator is provided such that the valve AV1 opens when a fault is detected. A plurality of each or any of the above-mentioned sources may be provided with an input into the control system PLC to enable control of a plurality of valves each corresponding to a respective sewer inlet discharging into the pumping station or a collecting system.

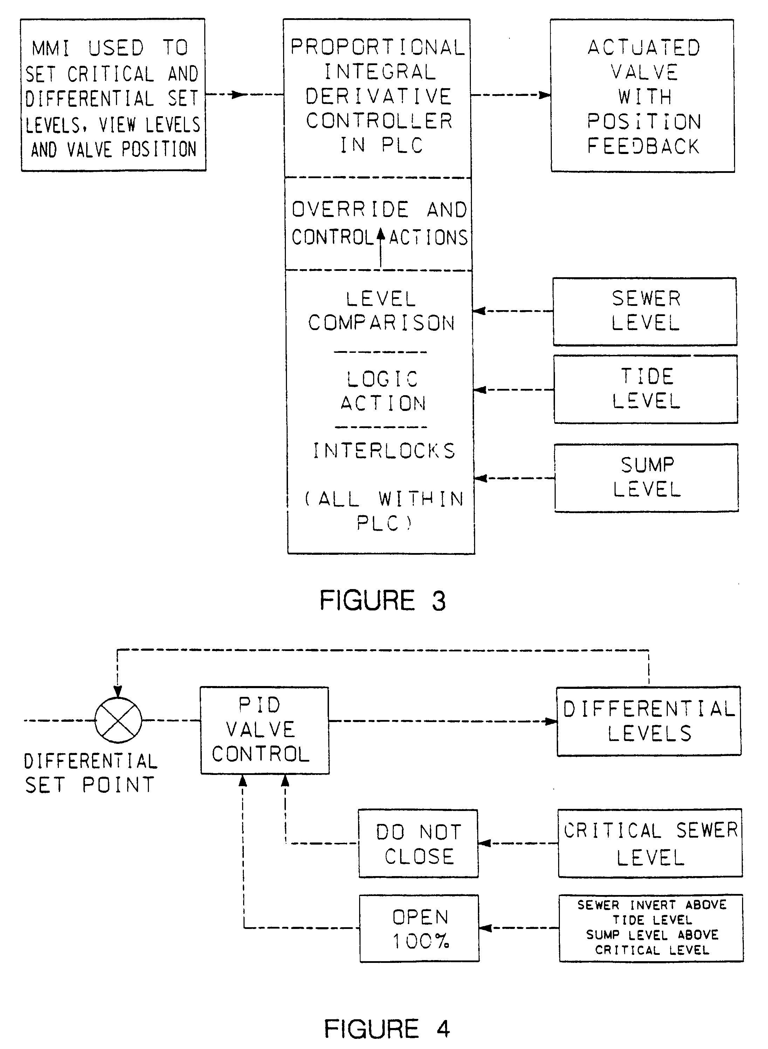

Figure 3 illustrates the flow of data in the control system 20. Information regarding the sewer, tide and sump levels passes to the control system PLC. The sewer and tide levels are compared in the control system PLC, which then inputs information into a proportional integral derivative (PID) controller within the PLC to initiate any necessary control action or, if fail-safe operation is required, override action to actuate the actuatable valve AV1. Information is also passed to the PID controller within the control system PLC from the man-machine interface (MMI) to set the required sewer level/tide level differential and the critical levels for the sewer and the sump. The man-machine interface also provides data display for viewing the valve position, the sewer, tide and sump levels and the various set levels.

As shown in Figure 4, the differential dH is fed back and compared with the set desired differential in a control loop, and this information is fed to the PID controller for controlling the valve AV1. However, fail-safe operation is provided in that, if the critical sewer level is reached, data is passed to the PID controller for causing the valve AV1 not to close. If the sewer invert (or predetermined set level) 15 is above the tide level 2 by a predetermined amount or the sump level 3 is above the critical level 4 data is passed to the PID controller for causing the valve to open fully.

In use, the tide level 2 rises, with the valve AV1 fully open, from a level below the invert level (or predetermined set level) 15 of the sewer inlet until it reaches a level the predetermined amount below the invert level (or predetermined set level) 15. At this point the valve AV1 is no longer caused to open fully. The level of sewage in the sewer 10 rises, and the PLC controls the valve AV1 such that the user defined differential of sewer level 1 above tide level 2 is maintained at a desired value or within a desired range of values, typically between 0mm and 75mm, until the tide level 2 drops below the invert level (or predetermined set level) 15 by the predetermined amount, at which time the PLC causes the valve AV1 to open fully. The valve AV1 now remains fully open, such that conditions in the sewer 10 upstream of the valve AV1 are similar to those in a gravity crude sewage outfall system at the same stage of the tide cycle.

Timers triggered by tide level sensors may be used to initiate certain control algorithms. For example, the valve AV1 may be caused to open for a predetermined period of time by a timer which is triggered when the free flowing tide level falls below the sewer invert level (or predetermined set level) 15.

There may be advantage in ensuring that valve AV1 is fully open for a time period during each tide cycle to allow the sewerage system to flush and self cleanse. This time period could be provided, for example, by triggering a timer to provide a predetermined flush period, and a modest head of tide over sewage may be accepted over this period.

Fail-safe control logic operates to override the maintenance of the user defined sewer head/tide head differential when a remote level sensor disposed at a critical location senses that the sewage has reached a critical sewer level at that location, and the valve AV1 is controlled to prevent flooding at the critical location so far as the sewer capacity allows. Critical sewer levels may be caused, for example, by high tide levels whereby maintaining the predetermined sewer head/tide head differential would require a higher than critical sewer level, or by heavy rainfall, or a combination of high tide and rainfall.

The remote flooding sensitivity at a critical location may be provided using a sewer level sensor which senses the level of sewage elsewhere than at the critical location, for example in the proximity of the valve AV1 at the pumping station or collection system. In this case it is necessary to take into account the effective head (critical differential) induced at the critical location as a result of hydraulic losses between the critical location and the sensor location. These losses (and thus the critical differential) vary according to the rate of flow of sewage. The maximum critical differential occurs, for example, during heavy rainfall or high tide with rainfall, and is the head necessary to drive sewage at the critical level from the critical location to the sensor location with the valve AV1 fully open. The PLC therefore varies the critical differential according to the flow rate, i.e. according to the amount by which the valve is open, to ensure that the head of sewage at the sensor location combined with the critical differential remains below the critical level for the critical location.

The fail-safe operation of the sewerage system described above mitigates the likelihood of the sewer 10 or sump 5 overflowing in storm conditions either at the pumping station PS or at those critical locations for which the system is sensitive to remote flooding.

If the volume of sewage in the incoming sewer 10 is insufficient to maintain the desired sewage level/tide level differential, then sewage may be pumped back using pumping apparatus (not shown) from the sump 5 into the sewer 10, or sewage may be released from a rising main or storage tank into the sewer 10 by valve means (not shown) controlled by the PLC, until the desired differential is achieved. Release or pump back of sewage into the sewer 10 as described above may be effected using a timer triggered by the tide level sensor 2 and/or by the PLC using the sewer level/tide level differential.

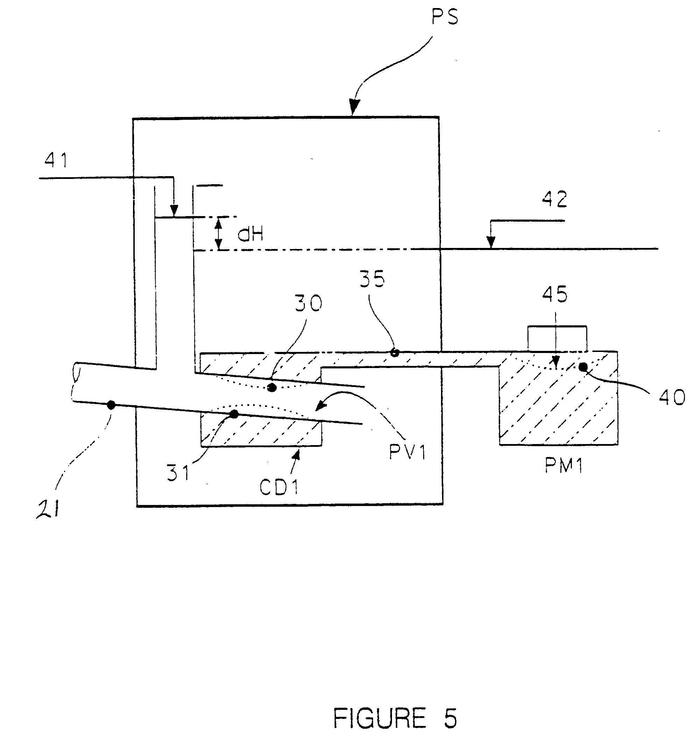

Figure 5 shows another sewerage system having a pressure module PM1 for transmitting pressure to a remote control device CD1 comprising a pinch valve PV1 disposed near the end of a sewer inlet 21 of a sewer arranged to discharge sewage into a pumping station PS, for example.

The pinch valve PV1 comprises a conduit having an elastically deformable wall 30 for conveying sewage. This wall 30 is deformable in response to the pressure of sewage inside the conduit and the pressure exerted on the outer surface of the deformable wall 30 by an incompressible fluid in an hydraulic system 35. The deformable wall 30 is shown in broken lines in Figure 5 in a deformed condition (ie with the pinch valve PV1 partially closed) and also in a non-deformed condition (ie with the pinch valve PV1 fully open). The pinch valve conduit also comprises a rigid outer sleeve 31, shown in unbroken lines in Figure 5.

The pressure module PM1 is subject to the varying hydrostatic pressure of the tide influencing the sewer at the end of which the pinch valve PV1 is provided.

## Claims

1. Method for reducing saline infiltration in coastal sewerage systems, wherein the level (1; 41) or hydrostatic pressure of sewage in a sewer (10; 20) which is subject to tidal influences and the level (2; 42) or hydrostatic pressure of the influencing tide are used for controlling valve means (AV1; PV1) to regulate discharge of said sewage from said sewer into a sewage pumping station or collecting system such that the hydrostatic head of the influencing tide adjacent the sewer does not exceed the hydrostatic head of sewage in the sewer upstream of said valve means by more than a predetermined amount, at least during non-extreme conditions of tide and weather.

2. Method as claimed in claim 1, wherein said discharge is regulated such that said hydrostatic head of sewage in the sewer upstream of said valve means (AV1; PV1) is greater than said hydrostatic head of the influencing tide adjacent the sewer.

3. Method as claimed in claim 1, wherein said discharge is regulated such that said hydrostatic head of sewage in the sewer upstream of said valve means (AV1; PV1) is 0mm to 75mm above said hydrostatic head of the influencing tide adjacent the sewer when the level (2; 42) of the influencing tide is above a predetermined set level.

4. Method as claimed in any one of the preceding claims, wherein the level of sewage upstream of said valve means (AV1; PV1) and the level (2; 42) of the influencing tide are detected by respective sewage (LS1) and tide (LS2; PM1) detector means and passed to a control means for controlling said valve means.

5. Method as claimed in claim 4, wherein said tide detector means (LS1; PM1) and said sewage detector means (LS1) each comprises an ultrasonic level sensor or a pressure transducer.

6. Method as claimed in claim 4 or 5, wherein said control means (20) is a programmable logic controller (PLC) which processes said detected levels (1, 2; 41, 42) and information from said valve means (AV1; PV1) and causes said valve means to open or close at user determined rates according to the differential between said levels.

7. Method as claimed in any one of claims 4 to 6, wherein said control means receives and processes information from a plurality of detector means and a plurality of valve means, and controls said plurality of valve means.

8. Method as claimed in claim 6 or 7 wherein said programmable logic controller is programmed such that it does not cause the valve means to close if a predetermined critical level of sewage is detected in the sewer upstream of the valve means.

9. Method as claimed in claim 6, 7 or 8, wherein said programmable logic controller is programmed such that it causes the valve means to open fully when the detected level of the influencing tide is below a predetermined set level.

10. Method as claimed in claim 9, wherein said programmable logic controller is programmed such that it causes the valve means to open fully when the detected level of the influencing tide is below the predetermined set level by a predetermined amount.

11. Method as claimed in any one of claims 6 to 10, wherein said sewer discharges into a sump (5) and the level (3) of fluids in the sump is detected and passed to said programmable logic controller, said programmable logic controller being programmed such that it causes the valve means to open fully when the detected level of the fluids in the sump is above a predetermined critical level.

12. Method as claimed in any one of the preceding claims, wherein if the flow of sewage in the sewer is insufficient to maintain a desired differential in hydrostatic head, fluids are fed into the sewer to maintain said desired differential.

13. Method as claimed in claim 12 when dependent on claim 11, wherein if the flow of sewage in the sewer is insufficient to maintain said desired differential in hydrostatic head, sewage is pumped back into the sewer from said sump to maintain said desired differential.

14. Method as claimed in claim 1, 2 or 3, wherein said valve means is operated by the application of pressure transmitted from a pressure module (PM1) subject to the varying hydrostatic head of the influencing tide.

15. Method as claimed in claim 14, wherein said pressure module is subject to a pre-load (45).

16. Method as claimed in claim 15, wherein said valve means comprises a conduit having an elastically deformable wall (30) for conveying said sewage, said pressure module comprises a flexible membrane, and pressure in said pressure module is generated by said pre-load and the varying hydrostatic head of the influencing tide acting on said membrane and is transmitted to the outer surface of the deformable wall by incompressible fluid in an hydraulic system to vary the minimum cross section of the flow path through said conduit according to the pressure differential across the deformable wall.

17. Method as claimed in any one of claims 14 to 16, wherein the pressure is amplified by amplifying means before transmission to said valve means.

18. Method as claimed in claim 17, wherein said amplifying means comprises a servo device.

19. Method as claimed in any one of claims 14 to 18, wherein if the flow of sewage in the sewer is insufficient to maintain a desired differential in hydrostatic head, fluids are fed into the sewer to maintain said desired differential.

20. Apparatus for reducing saline infiltration in coastal sewerage systems comprising sewage detector means (LS1) for detecting the level of sewage in a sewer (10) which is subject to tidal influences; tide detector means (LS2; PM1) for detecting the level of the influencing tide; valve means for (AV1; PV1) for regulating the discharge of sewage from said sewer; and control means (20) responsive to said sewage detector means, said tide detector means and said valve means for controlling said valve means such that the hydrostatic head of the influencing tide adjacent the sewer does not exceed the hydrostatic head of sewage in said sewer upstream of said valve means by more than a predetermined amount.

21. Apparatus as claimed in claim 20, wherein said control means (20) comprises a programmable logic controller (PLC).

22. Apparatus as claimed in claim 20 or 21, wherein said sewage detector means and said tide detector means each comprises an ultrasonic level sensor or a pressure transducer.

23. Apparatus as claimed in claim 20, 21 or 22, wherein said valve means comprises an electrically, pneumatically or hydraulically driven actuatable valve.

24. Apparatus as claimed in any one of claims 21 to 23, wherein said programmable logic controller is programmed such that, in use, it does not cause the valve means to close if a predetermined critical level of sewage is detected in the sewer upstream of the valve means.

25. Apparatus as claimed in any one of claims 21 to 24, wherein said programmable logic controller is programmed such that, in use, it causes the valve means to open fully when the detected level of the influencing tide is below a predetermined set level or below the predetermined set level by a predetermined amount.

26. Apparatus as claimed in any one of claims 21 to 25, further comprising sump detector means (LS3) for detecting the level (3) of fluids in a sump (5) into which the sewer discharges, and wherein said programmable logic controller is programmed such that, in use, it causes the valve means to open fully when the detected level of the fluids in the sump is above a predetermined critical level.

27. Apparatus as claimed in any one of claims 20 to 26 comprising a plurality of said valve means, said sewage detector means and said tide detector means corresponding to respective sewers, and wherein said control means is responsive thereto for controlling said plurality of valve means.

28. Apparatus for reducing saline infiltration in coastal sewerage systems comprising; a remote pressure responsive valve means (PV1) and a pressure module (PM1) able to transmit the varying hydrostatic pressure of a tide which influences a sewer (21) to said remote pressure responsive valve means (PV1), said valve means (PV1) being able to regulate the discharge of sewage from said sewer.

29. Apparatus as claimed in claim 28, wherein said pressure module is pre-loaded and is able to transmit a pre-load pressure with said varying hydrostatic pressure of the influencing tide to said pressure responsive valve means.

30. Apparatus as claimed in claim 29, including means for transmitting said pre-load and varying hydrostatic pressures by an incompressible fluid and wherein said pressure responsive valve means comprises a pinch valve having an elastically deformable wall for conveying sewage able to regulate the discharge of sewage according to the differential between the pressure of the sewage inside said deformable wall and the pressure of said incompressible fluid outside said deformable wall.

31. Apparatus as claimed in claim 30, wherein said pinch value comprises a conduit having said elastically deformable wall and a rigid outer sleeve.

32. Apparatus as claimed in claim 30 or 31, wherein said pressure module comprises a flexible membrane sized to allow displacement of a volume of said incompressible fluid necessary to close said valve means.

33. Apparatus as claimed in any one of claims 28 to 32, including amplifying means for amplifying said hydrostatic and/or pre-load pressure.

34. Apparatus as claimed in claim 33, wherein said amplifying means comprises a servo device.

## Patentansprüche

1. Verfahren zum Reduzieren der Salzeinsickerung in Küsten-Entwässerungssystemen, wobei das Niveau (1; 41) oder der hydrostatische Druck des Abwassers in einem Gezeiteneinflüssen ausgesetzten Abwasserkanal (10; 20) und das Niveau (2; 42) oder der hydrostatische Druck der einwirkenden Tide zur Steuerung einer Ventileinrichtung (AV1; PV1) verwendet werden, um den Austritt des Abwassers aus dem Abwasserkanal in eine Abwasserpumpstation oder ein Sammelsystem so zu regulieren, daß das hydrostatische Gefälle neben dem Abwasserkanal nicht das hydrostatische Gefälle des Abwassers im Abwasserkanal oberhalb der Ventileinrichtung um mehr als einen vorbestimmten Betrag übersteigt, wenigstens solange keine extremen Gezeiten- und Wetterbedingungen herrschen.

2. Verfahren nach Anspruch 1, wobei der Austritt so reguliert wird, daß das hydrostatische Gefälle des Abwassers im Abwasserkanal oberhalb der Ventileinrichtung (AV1; PV1) größer ist als das hydrostatische Gefälle der einwirkenden Tide neben dem Abwasserkanal.

3. Verfahren nach Anspruch 1, wobei der Austritt so reguliert wird, daß das hydrostatische Gefälle des Abwassers im Abwasserkanal oberhalb der Ventileinrichtung (AV1; PV1) 0 mm bis 75 mm über dem hydrostatischen Gefälle der einwirkenden Tide neben dem Abwasserkanal liegt, wenn das Niveau (2; 42) der einwirkenden Tide über einem vorher festgesetzten Niveau liegt.

4. Verfahren nach einem der vorstehenden Ansprüche, wobei das Abwasserniveau oberhalb der Ventileinrichtung (AV1; PV1) und das Niveau (2; 42) der einwirkenden Tide jeweils durch eine Abwasserdetektoreinrichtung (LS1) und eine Tidendetektoreinrichtung (LS2; PM1) erfaßt und zu einer Steuereinrichtung zur Steuerung der Ventileinrichtung weitergegeben werden.

5. Verfahren nach Anspruch 4, wobei die Tidendetektoreinrichtung (LS2; PM1) und die Abwasserdetektoreinrichtung (LS1) jeweils einen Ultraschall-Niveausensor oder einen Druckwandler aufweisen.

6. Verfahren nach Anspruch 4 oder 5, wobei die Steuereinrichtung (20) in einem programmierbaren logischen Steuergerät (PLC) besteht, das die erfaßten Niveaus (1, 2; 41, 42) und Informationen von der Ventileinrichtung (AV1; PV1) verarbeitet und ein Öffnen oder Schließen der Ventileinrichtung zu benutzerdefinierten Raten gemäß der Differenz zwischen den Niveaus herbeiführt.

7. Verfahren nach einem der Ansprüche 4 bis 6, wobei die Steuereinrichtung Informationen von mehreren Detektoreinrichtungen und mehreren Ventileinrichtungen empfängt und verarbeitet und die mehreren Ventileinrichtungen steuert.

8. Verfahren nach Anspruch 6 oder 7, wobei das programmierbare logische Steuergerät so programmiert ist, daß es kein Schließen der Ventileinrichtung herbeiführt, wenn ein vorbestimmtes kritisches Abwasserniveau im Abwasserkanal oberhalb der Ventileinrichtung detektiert wird.

9. Verfahren nach Anspruch 6, 7 oder 8, wobei das programmierbare logische Steuergerät so programmiert ist, daß es ein volles Öffnen der Ventileinrichtung herbeiführt, wenn das detektierte Niveau der einwirkenden Tide unter einem vorher festgesetzten Niveau liegt.

10. Verfahren nach Anspruch 9, wobei das programmierbare logische Steuergerät so programmiert ist, daß es ein volles Öffnen der Ventileinrichtung herbeiführt, wenn das detektierte Niveau der einwirkenden Tide das vorher festgelegte Niveau um einen vorbestimmten Betrag unterschreitet.

11. Verfahren nach einem der Ansprüche 6 bis 10, wobei der Abwasserkanal in eine Sickergrube (5) austritt, und das Niveau (3) der Strömungsmittel in der Sickergrube erfaßt und zu dem programmierbaren logischen Steuergerät weitergeleitet wird, und das programmierbare logische Steuergerät so programmiert ist, daß es ein volles Öffnen der Ventileinrichtung herbeiführt, wenn das erfaßte Niveau der Strömungsmittel in der Sickergrube über einem vorbestimmten kritischen Niveau liegt.

12. Verfahren nach einem der vorstehenden Ansprüche, wobei falls der Abwasserfluß im Abwasserkanal nicht zur Aufrechterhaltung einer gewünschten Differenz im hydrostatischen Gefälle ausreicht, Strömungsmittel in den Abwasserkanal zur Aufrechterhaltung der gewünschten Differenz eingeleitet werden.

13. Verfahren nach Anspruch 12, wenn abhängig von Anspruch 11, wobei, falls der Abwasserfluß im Abwasserkanal nicht zur Aufrechterhaltung der gewünschten Differenz im hydrostatischen Gefälle ausreicht, Abwasser von der Sickergrube zurück in den Abwasserkanal gepumpt wird, um die gewünschte Differenz aufrecht zu erhalten.

14. Verfahren nach Anspruch 1, 2 oder 3, wobei die Ventileinrichtung durch Anwendung von Druck betrieben wird, der von einem Druckmodul (PM1) abhängig von dem variierenden hydrostatischen Gefälle der einwirkenden Tide übertragen wird.

15. Verfahren nach Anspruch 14, wobei das Druckmodul einer Vorlast (45) ausgesetzt ist.

16. Verfahren nach Anspruch 15, wobei die Ventileinrichtung eine Leitung mit elastisch verformbarer Wand (30) zum Leiten des Abwassers aufweist, das Druckmodul eine flexible Membran aufweist, und Druck in dem Druckmodul durch die Vorlast und das variierende hydrostatische Gefälle der einwirkenden Tide, die auf die Membran Einfluß nimmt, erzeugt und zu der Außenfläche der verformbaren Wand durch ein inkompressibles Strömungsmittel in einem Hydrauliksystem übertragen wird, um den minimalen Querschnitt des Fließwegs durch die Leitung gemäß der Druckdifferenz quer über die verformbare Wand zu variieren.

17. Verfahren nach einem der Ansprüche 14 bis 16, wobei der Druck durch eine Verstärkereinrichtung vor der Übertragung zu der Ventileinrichtung verstärkt wird.

18. Verfahren nach Anspruch 17, wobei die Verstärkereinrichtung eine Servo-Vorrichtung aufweist.

19. Verfahren nach einem der Ansprüche 14 bis 18, wobei, falls der Abwasserfluß im Abwasserkanal nicht zur Aufrechterhaltung einer gewünschten Differenz im hydrostatischen Gefälle ausreicht, Strömungsmittel in den Abwasserkanal eingeleitet werden, um die gewünschte Differenz aufrecht zu erhalten.

20. Vorrichtung zum Reduzieren der Salzeinsickerung in Küsten-Abwassersystemen mit
einer Abwasserdetektoreinrichtung (LS1) zum Erfassen des Abwasserniveaus in einem Gezeiteneinflüssen ausgesetzten Abwasserkanal (10);
einer Tidendetektoreinrichtung (LS2; PM1) zum Erfassen des Niveaus der einwirkenden Tide;
einer Ventileinrichtung (AV1; PV1) zum Regulieren des Abwasseraustritts vom Abwasserkanal; und
einer Steuereinrichtung (20), um die Ventileinrichtung in Abhängigkeit von der Abwasserdetektoreinrichtung, der Tidendetektoreinrichtung und der Ventileinrichtung so zu steuert, daß das hydrostatische Gefälle der einwirkenden Tide neben dem Abwasserkanal das hydrostatische Gefälle des Abwassers im Abwasserkanal oberhalb der Ventileinrichtung nicht um mehr als einen vorbestimmten Betrag übersteigt.

21. Vorrichtung nach Anspruch 20, wobei die Steuereinrichtung (20) ein programmierbares logisches Steuergerät (PLC) aufweist.

22. Vorrichtung nach Anspruch 20 oder 21, wobei die Abwasserdetektoreinrichtung und die Tidendetektoreinrichtung jeweils einen Ultraschall-Niveausensor oder einen Druckwandler aufweisen.

23. Vorrichtung nach Anspruch 20, 21 oder 22, wobei die Ventileinrichtung eine elektrisch, pneumatisch oder hydraulisch betriebenes Bedienungsventil aufweist.

24. Vorrichtung nach einem der Ansprüche 21 bis 23, wobei das programmierbare logische Steuergerät so programmiert ist, daß es in Gebrauch kein Schließen der Ventileinrichtung herbeiführt, wenn ein vorbestimmtes kritisches Abwasserniveau im Abwasserkanal oberhalb der Ventileinrichtung detektiert wird.

25. Vorrichtung nach einem der Ansprüche 21 bis 24, wobei das programmierbare logische Steuergerät so programmiert ist, daß es in Gebrauch ein volles Öffnen der Ventileinrichtung herbeiführt, wenn das detektierte Niveau der einwirkenden Tide unter einem vorher festgelegten Niveau oder um einen vorbestimmten Betrag unter dem vorher festgelegten Niveau liegt.

26. Vorrichtung nach einem der Ansprüche 21 bis 25, ferner mit einer Sickergruben-Detektoreinrichtung (LS3) zum Erfassen des Niveaus (3) von Strömungsmitteln in einer Sickergrube (5), in die der Abwasserkanal austritt, wobei das programmierbare logische Steuergerät so programmiert ist, daß es im Gebrauch ein volles Öffnen der Ventileinrichtung herbeiführt, wenn das detektierte Niveau der Strömungsmittel in der Sikkergrube über einem vorbestimmten kritischen Niveau liegt.

27. Vorrichtung nach einem der Ansprüche 20 bis 26 mit mehreren dieser Ventileinrichtungen, dieser Abwasserdetektoreinrichtungen und dieser Tidendetektoreinrichtungen zu den jeweiligen Abwasserkanälen, wobei die Steuereinrichtung darauf zum Steuern der mehreren Ventileinrichtungen anspricht.

28. Vorrichtung zum Reduzieren der Salzeinsickerung in Küsten-Abwassersystemen mit einer auf Ferndruckeinwirkung ansprechenden Ventileinrichtung (PV1) und einem Druckmodul. (PM1) zum Übertragen des variierenden hydrostatischen Drucks einer auf einen Abwasserkanal (21) einwirkenden Tide zu der auf Ferndruckeinwirkung reagierenden Ventileinrichtung (PV1), wobei die Ventileinrichtung (PV1) zum Regulieren des Abwasseraustritts aus dem Abwasserkanal ausgelegt ist.

29. Vorrichtung nach Anspruch 28, wobei das Druckmodul vorbelastet und zum Übertragen eines Vorlastdrucks mit dem variierenden hydrostatischen Druck der einwirkenden Tide zu der auf Druck ansprechenden Ventileinrichtung ausgelegt ist.

30. Vorrichtung nach Anspruch 29, mit einer Einrichtung zum Übertragen der Vorlast und der variierenden hydrostatischen Drücke über ein inkompressibles Strömungsmittel, wobei die auf Druck reagierende Ventileinrichtung ein Quetschventil mit einer elastisch verformbaren Wand zum Leiten des Abwassers aufweist, das zum Regulieren des Abwasseraustritts gemäß der Differenz des Abwasserdrucks innerhalb der verformbaren Wand und des Drucks des inkompressiblen Strömungsmittels außerhalb der verformbaren Wand ausgelegt ist.

31. Vorrichtung nach Anspruch 13, wobei das Quetschventil eine Leitung mit der elastisch verformbaren Wand und einer starren Außenhülse aufweist.

32. Vorrichtung nach Anspruch 30 oder 31, wobei das Druckmodul eine flexible Membran aufweist, die so proportioniert ist, daß sie die Verschiebung eines Volumens des inkompressiblen Strömungsmittels erlaubt, die notwendig ist, um die Ventileinrichtung zu schließen.

33. Vorrichtung nach einem der Ansprüche 28 bis 32 mit einer Verstärkereinrichtung zum Verstärken des hydrostatischen Drucks und/oder des Vorlastdrucks.

34. Vorrichtung nach Anspruch 33, wobei die Verstärkereinrichtung eine Servo-Vorrichtung aufweist.

## Revendications

1. Procédé pour réduire une infiltration saline dans des systèmes d'égouts côtiers, dans lequel le niveau (1; 41) ou la pression hydrostatique d'eaux usées dans un égout (10; 20) qui est soumis à l'influence de la marée et le niveau (2; 42) ou la pression hydrostatique de la marée exerçant une influence sont utilisés pour commander un moyen formant vanne (AV1; PV1) afin de réguler une décharge desdites eaux usées à partir dudit égout dans une station de pompage ou un système collecteur d'eaux usées de façon que la charge hydrostatique de la marée exerçant une influence à proximité de l'égout n'excède pas la hauteur hydrostatique des eaux usées présentes dans l'égout en amont dudit moyen formant vanne de plus d'une valeur prédéterminée, au moins pendant des conditions de marée et météorologiques non extrêmes.

2. Procédé tel que défini dans la revendication 1, dans lequel ladite décharge est régulée de façon que ladite charge hydrostatique des eaux usées présentes dans l'égout en amont dudit moyen formant vanne (AV1; PV1) soit supérieure à ladite charge hydrostatique de la marée exerçant une influence à proximité de l'égout.

3. Procédé tel que défini dans la revendication dans lequel ladite décharge est régulée de façon que ladite charge hydrostatique des eaux usées présentes dans l'égout en amont dudit moyen formant vanne (AV1; PV1) soit supérieure de 0 mm à 75 mm à ladite charge hydrostatique de la marée exerçant une influence à proximité de l'égout, lorsque le niveau (2; 42) de la marée exerçant une influence est supérieur à un niveau de consigne prédéterminé.

4. Procédé tel que défini dans l'une quelconque des revendications précédentes, dans lequel le niveau des eaux usées en amont dudit moyen formant vanne (AV1; PV1) et le niveau (2; 42) de la marée exerçant une influence sont détectés par des moyens détecteurs d'eaux usées (LS1) et de marée (LS2; PM1) respectifs et sont transmis à un moyen de commande destiné à commander ledit moyen formant vanne.

5. Procédé tel que défini dans la revendication 4, dans lequel ledit moyen détecteur de marée (LS2; PM1) et ledit moyen détecteur d'eaux usées (LS1) comprennent chacun un détecteur de niveau à ultrasons ou un transducteur de pression.

6. Procédé tel que défini dans la revendication 4 ou 5, dans lequel ledit moyen de commande (20) est un organe de commande logique programmable (PLC) qui traite lesdits niveaux détectés (1, 2; 41, 42) et des informations provenant dudit moyen formant vanne (AV1; PV1) et qui oblige ledit moyen formant vanne à s'ouvrir ou à se fermer à des vitesses déterminées par un opérateur en fonction du différentiel entre lesdits niveaux.

7. Procédé tel que défini dans l'une quelconque des revendications 4 à 6, dans lequel ledit moyen de commande reçoit et traite des informations provenant de multiples moyens détecteurs et de multiples moyens formant vannes, et commande lesdits multiples moyens formant vannes.

8. Procédé tel que défini dans la revendication 6 ou 7, dans lequel ledit organe de commande logique programmable est programmé pour ne pas obliger les moyens formant vannes à se fermer si un niveau critique prédéterminé d'eaux usées est détecté dans l'égout en amont des moyens formant vannes.

9. Procédé tel que défini dans la revendication 6, 7 ou 8, dans lequel ledit organe de commande logique programmable est programmé pour obliger les moyens formant vannes à s'ouvrir complètement lorsque le niveau détecté de la marée exerçant une influence est inférieur à un niveau de consigne prédéterminé.

10. Procédé tel que défini dans la revendication 9, dans lequel ledit organe de commande logique programmable est programmé pour obliger les moyens formant vannes à s'ouvrir complètement lorsque le niveau détecté de la marée exerçant une influence est inférieur d'une valeur prédéterminée au niveau de consigne prédéterminé.

11. Procédé tel que défini dans l'une quelconque des revendications 6 à 10, dans lequel ledit égout se décharge dans un bassin (3) et le niveau de fluides dans le bassin est détecté et transmis audit organe de commande logique programmable, ledit organe de commande logique programmable étant programmé pour obliger les moyens formant vannes à s'ouvrir complètement lorsque le niveau détecté de fluides dans le bassin est supérieur à un niveau critique prédéterminé.

12. Procédé tel que défini dans l'une quelconque des revendications précédentes, dans lequel si l'écoulement d'eaux usées dans l'égout est insuffisant pour maintenir un différentiel de charge hydrostatique voulu, des fluides sont délivrés dans l'égout pour maintenir ledit différentiel voulu.

13. Procédé tel que défini dans la revendication 12, lorsque celle-ci est dépendante de la revendication 11, dans lequel si l'écoulement d'eaux usées dans l'égout est insuffisant pour maintenir ledit différentiel de charge hydrostatique voulu, des eaux usées sont renvoyées par pompage dans l'égout à partir dudit bassin pour maintenir ledit différentiel voulu.

14. Procédé tel que défini dans la revendication 1, 2 ou 3, dans lequel ledit moyen formant vanne est actionné par l'application d'une pression transmise à partir d'un module de pression (PM1) soumis à la charge hydrostatique variable de la marée exerçant une influence.

15. Procédé tel que défini dans la revendication 14, dans lequel ledit module de pression est soumis à une précharge (45).

16. Procédé tel que défini dans la revendication 15, dans lequel ledit moyen formant vanne comprend un conduit comportant une paroi (30) déformable élastiquement pour transporter lesdites eaux usées, ledit module de pression comprenant une membrane souple, et la pression dans ledit module de pression est générée par ladite précharge et par la charge hydrostatique variable de la marée exerçant une influence, qui agit sur ladite membrane, et est transmise à la surface extérieure de la paroi déformable par un fluide incompressible d'un système hydraulique pour faire varier la section minimale du passage d'écoulement à travers ledit conduit en fonction du différentiel de pression d'un côté à l'autre de la paroi déformable.

17. Procédé tel que défini dans l'une quelconque des revendications 14 à 16, dans lequel la pression est amplifiée par un moyen amplificateur avant d'être transmise audit moyen formant vanne.

18. Procédé tel que défini dans la revendication 17, dans lequel ledit moyen amplificateur comprend un dispositif asservi.

19. Procédé tel que défini dans l'une quelconque des revendications 14 à 18, dans lequel si l'écoulement d'eaux usées dans l'égout est insuffisant pour maintenir un différentiel de charge hydrostatique voulu, des fluides sont délivrés dans l'égout pour maintenir ledit différentiel voulu.

20. Dispositif pour réduire une infiltration saline dans des systèmes d'égouts côtiers, comprenant un moyen détecteur d'eaux usées (LS1) destiné à détecter le niveau d'eaux usées dans un égout (10) qui est soumis à l'influence de la marée; un moyen détecteur de marée (LS2; PM1) destiné à détecter le niveau de la marée exerçant une influence; un moyen formant vanne (AV1; PV1) destiné à réguler la décharge d'eaux usées à partir dudit égout; et un moyen de commande (20) sensible audit moyen détecteur d'eaux usées, audit moyen détecteur de marée et audit moyen formant vanne pour commander ledit moyen formant vanne de façon que la charge hydrostatique de la marée exerçant une influence à proximité de l'égout n'excède pas la charge hydrostatique des eaux usées présentes dans ledit égout en amont dudit moyen formant vanne de plus d'une valeur prédéterminée.

21. Dispositif tel que défini dans la revendication 20, dans lequel ledit moyen de commande (20) comprend un organe de commande logique programmable (PLC).

22. Dispositif tel que défini dans la revendication 20 ou 21, dans lequel ledit moyen détecteur d'eaux usées et ledit moyen détecteur de marée comprennent chacun un détecteur de niveau à ultrasons ou un transducteur de pression.

23. Dispositif tel que défini dans la revendication 20, 21 ou 22, dans lequel ledit moyen formant vanne comprend une vanne apte à être actionnée par une commande électrique, pneumatique ou hydraulique.

24. Dispositif tel que défini dans l'une quelconque des revendications 21 à 23, dans lequel ledit organe de commande logique programmable est programmé pour, en service, ne pas obliger le moyen formant vanne à se fermer si un niveau critique prédéterminé d'eaux usées est détecté dans l'égout en amont du moyen formant vanne.

25. Dispositif tel que défini dans l'une quelconque des revendications 21 à 24, dans lequel ledit organe de commande logique programmable est programmé pour, en service, obliger le moyen formant vanne à s'ouvrir complètement lorsque le niveau détecté de la marée exerçant une influence est inférieur à un niveau de consigne prédéterminé ou inférieur d'une valeur prédéterminée au niveau de consigne prédéterminé.

26. Dispositif tel que défini dans l'une quelconque des revendications 21 à 25, comprenant également un moyen détecteur de bassin (LS3) destiné à détecter le niveau (3) de fluides dans un bassin (3) dans lequel l'égout se décharge, et dans lequel ledit organe de commande logique programmable est programmé pour, en service, obliger le moyen formant vanne à s'ouvrir complètement lorsque le niveau détecté des fluides dans le bassin est supérieur à un niveau critique prédéterminé.

27. Dispositif tel que défini dans l'une quelconque des revendications 20 à 26, comprenant de multiples moyens formant vannes, de multiples moyens détecteurs d'eaux usées et de multiples moyens détecteurs de marée correspondant à des égouts respectifs, et dans lequel ledit moyen de commande est sensible à ces moyens pour commander lesdits multiples moyens formant vannes.

28. Dispositif pour réduire une infiltration saline dans des systèmes d'égouts côtiers, comprenant un moyen formant vanne sensible à une pression à distance (PV1) et un module de pression (PM1) apte à transmettre la pression hydrostatique variable d'une marée exerçant une influence sur un égout (21) audit moyen formant vanne sensible à une pression à distance (PV1), ledit moyen formant vanne (PV1) étant apte à réguler la décharge d'eaux usées à partir dudit égout.

29. Dispositif tel que défini dans la revendication 28, dans lequel ledit module de pression est préchargé et apte à transmettre audit moyen formant vanne sensible à une pression une pression de précharge en même temps que ladite pression hydrostatique variable de la marée exerçant une influence.

30. Dispositif tel que défini dans la revendication 29, comprenant un moyen pour transmettre ladite pression de précharge et ladite pression hydrostatique variable à l'aide d'un fluide incompressible, et dans lequel ledit moyen formant vanne sensible à une pression comprend une soupape à striction comportant une paroi déformable élastiquement pour transporter des eaux usées et apte à réguler la décharge des eaux usées en fonction du différentiel entre la pression des eaux usées à l'intérieur de ladite paroi déformable et la pression dudit fluide incompressible à l'extérieur de ladite paroi déformable.

31. Dispositif tel que défini dans la revendication 30, dans lequel ladite soupape à striction comprend un conduit comportant ladite paroi déformable élastiquement et un manchon extérieur rigide.

32. Dispositif tel que défini dans la revendication 30 ou 31, dans lequel ledit module de pression comprend une membrane souple dimensionnée pour permettre un déplacement d'un volume nécessaire dudit fluide incompressible pour fermer ledit moyen formant vanne.

33. Dispositif tel que défini dans l'une quelconque des revendications 28 à 32, comprenant un moyen amplificateur destiné à amplifier ladite pression hydrostatique et/ou ladite pression de précharge.

34. Dispositif tel que défini dans la revendication 33, dans lequel ledit moyen amplificateur comprend un dispositif asservi.
